(19) **Europäisches Patentamt / European Patent Office / Office européen des brevets**

(11) **EP 3 883 743 B1**

(12) **FASCICULE DE BREVET EUROPEEN**

(45) Date de publication et mention de la délivrance du brevet:
**31.08.2022 Bulletin 2022/35**

(21) Numéro de dépôt: **19835450.8**

(22) Date de dépôt: **19.11.2019**

(51) Classification Internationale des Brevets (IPC):
**B29C 49/78** *(2006.01)*   **B29C 49/48** *(2006.01)*
**B29C 49/06** *(2006.01)*   **B29C 49/12** *(2006.01)*
**B29C 49/36** *(2006.01)*   **B29K 67/00** *(2006.01)*
**B29L 31/00** *(2006.01)*

(52) Classification Coopérative des Brevets (CPC):
**B29C 49/78; B29C 49/4802;** B29C 49/06;
B29C 49/12; B29C 49/36; B29C 2049/4807;
B29K 2067/003; B29L 2031/7158

(86) Numéro de dépôt international:
**PCT/FR2019/052738**

(87) Numéro de publication internationale:
**WO 2020/104747 (28.05.2020 Gazette 2020/22)**

(54) **PROCÉDÉ DE FABRICATION D'UN RÉCIPIENT EN MATIÈRE PLASTIQUE MUNI D'UNE POIGNÉE OBTENUE PAR BOXAGE**

VERFAHREN ZUR HERSTELLUNG EINES KUNSTSTOFFBEHÄLTERS MIT EINEM UNTER VERWENDUNG VON VERPACKUNGSTECHNIK HERGESTELLTEN GRIFF

METHOD FOR MANUFACTURING A PLASTIC CONTAINER EQUIPPED WITH A HANDLE OBTAINED USING THE BOXING TECHNIQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2018 FR 1871596**

(43) Date de publication de la demande:
**29.09.2021 Bulletin 2021/39**

(73) Titulaire: **Sidel Participations**
**76930 Octeville-sur-Mer (FR)**

(72) Inventeur: **GUITON, Camille**
**76930 Octeville-sur-mer (FR)**

(74) Mandataire: **Sidel Group**
**c/o Sidel Participations**
**Avenue de la Patrouille de France**
**76930 Octeville-sur-mer (FR)**

(56) Documents cités:
**EP-A1- 0 346 518      US-A1- 2002 171 161**
**US-A1- 2011 298 162      US-A1- 2016 001 490**

**Description**

Le domaine de l'invention est celui de la conception et de la fabrication de récipients en matière plastique à partir de préformes.

Plus précisément, l'invention concerne un procédé et une unité de formage pour la réalisation de récipients en matière plastique, présentant une poignée boxée de manière centrée sur le récipient, lequel formage est réalisé par étirage-soufflage de préformes.

Les documents US2002/171161A1 et US2016/001490A1 sont représentatifs de l'état de l'art antérieur.

Classiquement, une préforme comprend un corps creux, généralement cylindrique de révolution, un col qui constitue le buvant du récipient à former, et un fond qui ferme le corps à l'opposé du col. Le fond est habituellement hémisphérique ou tout au moins symétrique de révolution par rapport à l'axe longitudinal de la préforme.

Pour réaliser une préforme, il est utilisé un moule d'injection, qui comporte un noyau d'injection (déterminant la forme de l'intérieur de la préforme) et une paroi extérieure (déterminant l'extérieur de la préforme). Le volume interne déterminé par l'agencement du noyau et de la paroi extérieure détermine la forme finale de la préforme. La matière plastique constitutive de la préforme est injectée à une très haute température (la matière est fluide) et à une pression élevée dans le moule d'injection par un conduit qui débouche dans ce volume, au travers de la paroi extérieure, à un emplacement de la paroi centré sur le fond de la préforme. C'est pourquoi, à l'issue de leur fabrication, les préformes comprennent au centre de leur fond une zone ponctuelle, appelée point d'injection.

La technique classique de fabrication d'un récipient à partir d'une préforme consiste à introduire la préforme, préalablement chauffée à une température supérieure à la température de transition vitreuse de la matière (environ 80°C dans le cas du PET), dans un moule muni d'une paroi définissant une cavité à l'empreinte du récipient, et à injecter dans la préforme, par une tuyère, un fluide tel qu'un gaz (généralement de l'air) sous pression pour plaquer la matière de la préforme contre la paroi du moule.

Le formage comprend en général une étape de pré-soufflage lors de laquelle le fluide est injecté à une pression de pré-soufflage relativement basse (ordinairement inférieure ou égale à 15 bars), et une étape de soufflage, postérieure à l'étape de pré-soufflage, lors de laquelle le fluide est injecté à une pression de soufflage élevée (ordinairement supérieure ou égale à 20 bars et pouvant atteindre une pression de l'ordre de 40 bars).

Sous l'effet de la pression, la matière ramollie par la chauffe forme une bulle qui enfle et se développe à la fois selon une direction axiale, parallèle à l'axe principal du moule, et suivant une direction radiale, perpendiculaire à l'axe principal du moule.

Lorsque le soufflage est terminé, une étape de dégazage débute pour évacuer le gaz sous pression à l'intérieur du récipient formé, jusqu'à ce que l'intérieur du récipient atteigne une pression égale à, ou à tout le moins proche de la pression atmosphérique.

Pour la mise en œuvre d'un procédé de fabrication par étirage-soufflage, l'unité de formage comprend une tige d'élongation (encore appelée tige d'étirage) destinée à étirer la préforme. Cette tige d'élongation est mobile en hauteur à l'intérieur du moule le long d'un axe d'extension. Le procédé comprend alors une étape d'étirage de la préforme qui présente successivement une phase de descente de la tige d'élongation jusqu'à une position basse, puis une phase de remontée de la tige d'élongation depuis sa position basse.

Cette tige d'élongation permet d'étirer la préforme en évitant tout désaxement du récipient formé. De cette manière, on assure la bonne tenue mécanique et l'obtention de l'esthétique désirée du récipient.

Plus précisément, une extrémité distale de la tige d'élongation vient repousser une zone du fond de la préforme, centrée sur le point d'injection de celle-ci, jusqu'à venir plaquer cette zone contre un fond de moule à l'empreinte du fond du récipient.

Il est à noter que, dans un procédé classiquement connu, l'initiation de la phase de remontée de la tige d'élongation se déroule après un pic de pression dans la phase de soufflage. L'instant d'initiation de la remontée de la tige d'élongation permet de s'assurer que le point d'injection est bien maintenu par la tige d'élongation jusqu'à ce que le récipient soit formé, et d'éviter ainsi un décentrement du fond de la préforme par rapport à l'extrémité de la tige, ce qui aurait pour conséquence un récipient mal formé.

On rappelle ici que lorsqu'un récipient est terminé, on retrouve en général au centre de son fond le point d'injection de la préforme et une zone amorphe en forme de pastille centrée sur ce point. En effet, il est connu depuis des années que lors de l'étirage et du soufflage, les zones peu ou pas étirées restent amorphes et la cristallisation de la matière plastique augmente avec l'étirage. Or, puisque la tige d'élongation maintient le point d'injection, le centre du fond de la préforme correspond à une zone qui n'est pas étirée lors de la fabrication du récipient ; l'étirage et donc la cristallinité augmentent au fur et à mesure que l'on s'éloigne du centre. Il y a donc, immédiatement autour du centre une zone peu étirée, donc amorphe, ce qui explique la présence de la pastille mentionnée. Le centre lui-même n'est pas du tout étiré ce qui explique pourquoi le point d'injection de la préforme se retrouve se retrouve sur le récipient fini.

Par ailleurs, une poignée peut être réalisée sur le récipient en cours de formation. Pour cela, le moule présente alors des inserts, dits inserts de boxage d'une poignée (par exemple deux) mobiles au travers de parois du moule.

Le procédé de fabrication comprend en conséquence une étape de boxage d'une poignée à l'aide des inserts, la poignée étant formée en rapprochant deux portions d'une paroi du récipient lors de sa formation sous l'action des inserts de boxage. Le boxage d'une poignée est initié rapidement au cours du procédé de fabrication du récipient de manière à ce que les inserts de boxage déforment la matière plastique encore ramollie. En effet, si cette étape de boxage intervient trop tard dans le procédé de fabrication et si la matière plastique a commencé à refroidir, il peut apparaître un phénomène de sur-étirage de la matière plastique (par exemple du PET) lors de la progression de l'insert de boxage d'une poignée.

Sur des récipients de grande et de moyenne taille, les poignées sont formées en coté du récipient, c'est-à-dire de façon décentrée. La création d'une poignée par boxage n'est toutefois pas aisément réalisable sur de petits récipients.

Tel que cela transparait des différentes étapes précédemment décrites d'un procédé de fabrication, la présence de la tige d'élongation empêche ou limite la formation d'une poignée sur une partie centrale du récipient, puisque la tige se trouve dans la zone d'impact des inserts, et la formation d'une poignée en partie latérale du récipient peut ne pas être envisageable du fait de sa petite taille.

L'invention a notamment pour objectif de pallier les inconvénients de l'art antérieur.

Plus précisément, l'invention a pour objectif de proposer un procédé de fabrication et une unité de formage permettant de fabriquer un récipient disposant d'une poignée boxée pouvant être située sur une partie centrale du récipient.

L'invention a également pour objectif de fournir un tel procédé et une telle unité de formage qui ne présentent pas de phénomène de sur-étirage de la matière plastique constituant le récipient.

L'invention a en outre pour objectif de fournir un tel procédé et une telle unité de formage qui permettent la fabrication d'un récipient à une cadence identique à celle des récipients selon l'art antérieur dont la poignée n'est pas centrée sur le récipient.

Ces objectifs, ainsi que d'autres qui apparaitront par la suite, sont atteints grâce à l'invention qui a pour objet un procédé de fabrication d'un récipient par étirage soufflage à partir d'une préforme en matière plastique au sein d'une unité de formage, l'unité de formage comprenant :

- un moule définissant une empreinte du récipient à former et comprenant au moins un insert de boxage d'une poignée, chaque insert étant mobile au travers d'une paroi du moule ;
- une tige d'élongation mobile en hauteur à l'intérieur du moule le long d'un axe d'extension et destinée à étirer la préforme,
- le procédé comprenant successivement une étape de pré-soufflage et une étape de soufflage, le procédé comprenant également :
- une étape d'étirage de la préforme comprenant successivement une phase de descente, et une phase de remontée de la tige d'élongation le long de l'axe d'extension ;
- une étape de boxage d'une poignée à l'aide du ou des inserts, la poignée étant formée en déformant au moins une portion, dite « portion déformée », d'une paroi du récipient,

caractérisé en ce que :

- la phase de remontée de la tige d'élongation est initiée avant l'étape de soufflage ;
- l'étape de boxage est initiée après la remontée de la tige d'élongation au-dessus d'une hauteur prédéterminée le long de l'axe d'extension sur laquelle la poignée est formée, la poignée étant formée sur l'axe d'extension de la tige d'élongation.

Bien entendu, ce procédé est également applicable à des ébauches, c'est à dire des récipients intermédiaires ayant déjà subi une opération de formage mais n'étant pas à leur forme définitive.

Grâce au procédé de fabrication selon l'invention, il est possible d'obtenir un récipient en matière plastique qui présente une poignée de préhension obtenue par boxage et située sur une partie centrale du récipient et notamment sur l'axe d'extension de la tige d'élongation à l'intérieur du moule qui définit l'empreinte du récipient à former.

Plus précisément, le procédé de fabrication permet la création de cette poignée alors que, pour un procédé de fabrication selon l'art antérieur, cette création est impossible du fait que la tige d'élongation empêche ou contrarie la déformation de la paroi du moule par le ou les inserts de boxage d'une poignée.

En effet, selon l'invention, la tige d'élongation est remontée avant l'étape de soufflage (au contraire de l'art antérieur où la phase de remontée de la tige d'élongation est initiée pendant la phase de soufflage). Ainsi, l'étape de boxage d'une poignée, située sur l'axe d'extension de la tige d'élongation, peut être initiée suffisamment tôt dans le cycle de fabrication du récipient alors que le matériau plastique est à une température appropriée pour le boxage. Une poignée centrée sur le récipient peut ainsi être créée tout en évitant un sur-étirage du matériau constituant le récipient.

En d'autres termes, en initiant l'étape de boxage juste après la remontée de la tige d'élongation au-dessus d'une hauteur prédéterminée en combinaison avec une initiation de la phase de remontée de la tige d'élongation avant l'étape de soufflage, on évite ainsi que le matériau plastique (par exemple du PET), ne descende en dessous de sa température de transition vitreuse préalablement au boxage, et que les inserts de boxage viennent sur-étirer ledit matériau plastique.

Selon un mode de réalisation préférentiel de l'invention, lors de l'étape de boxage d'une poignée, la ou les portions déformées entrent dans un volume précédemment occupé par la tige d'élongation dans une position basse entre sa phase de descente et sa phase de remontée.

Selon ce mode de réalisation, la ou les portions déformées peuvent arriver au contact avec le volume occupé par la tige d'élongation avant sa phase de remontée ou dépasser ce volume.

En d'autres termes, le récipient présente ainsi une portion déformée par boxage, formant la poignée, qui présente une profondeur de déformation telle qu'elle approche, atteint ou franchit l'axe central du récipient (qui lors de la formation du récipient dans le moule est confondu avec l'axe d'extension de la tige d'élongation).

Selon une caractéristique préférentielle, la poignée est formée en rapprochant deux portions déformées de la paroi du récipient au moins jusqu'à un espacement maximal, l'espacement maximal étant inférieur à un diamètre minimum de la tige d'élongation.

La création d'une telle poignée, sur un emplacement occupé par la tige d'élongation lors de l'étape d'étirage soufflage, est permise grâce au procédé selon l'invention du fait que la tige d'élongation est remontée avant l'étape de soufflage.

Avantageusement, la poignée est formée en rapprochant les deux portions déformées de la paroi du récipient jusqu'à une distance minimale dite « entrefer », l'entrefer étant inférieur au diamètre minimum de la tige d'élongation.

En rapprochant autant les deux portions déformées de la paroi du récipient, il peut apparaitre un effet de transparence au niveau de la poignée. Cet effet de transparence résulte du fait que, suite au remplissage du récipient et ce même si le contenu du récipient est coloré, le très faible écartement dit « entrefer » permet d'obtenir un effet de transparence au travers des deux portions déformées de la paroi et du liquide situé entre ces deux portions.

Selon une solution préférentielle, la phase de remontée de la tige d'élongation et l'étape de boxage sont initiées pendant l'étape de pré-soufflage.

De cette façon, il est favorisé une bonne déformation de la paroi du contenant qui est à ce stade du cycle de fabrication à une température supérieure à la température de transition vitreuse du plastique. On minimise ainsi le risque que l'étape de boxage soit initiée alors que le matériau constituant la préforme ait commencé à passer sous sa température de transition vitreuse.

Selon une autre solution préférentielle, la phase de remontée de la tige d'élongation est initiée pendant l'étape de pré-soufflage, et l'étape de boxage est initiée pendant l'étape de soufflage.

De cette manière, il peut également être obtenu une poignée boxée sur l'axe d'extension de la tige d'élongation sans qu'apparaisse un phénomène de sur-étirage du matériau plastique.

Selon un mode de réalisation avantageux, l'étape de boxage est initiée à l'aide d'un asservissement à la phase de remontée de la tige d'élongation.

Un tel asservissement évite la création d'interférence entre l'étape de boxage et l'étape d'étirage de la préforme. Il est en effet essentiel que la tige d'élongation soit remontée au-delà d'une hauteur prédéterminée pour que l'étape de boxage puisse se dérouler.

Avantageusement, la hauteur prédéterminée est située au-dessus d'un axe central de boxage le long duquel le ou les inserts sont mobiles, l'axe central de boxage étant sécant et perpendiculaire à l'axe d'extension de la tige d'élongation.

Avec cette conception, c'est avec certitude que l'étape de boxage par le ou les inserts peut être initiée du fait que la hauteur prédéterminée de remontée de la tige d'élongation est située au-delà de l'axe central de boxage.

Selon une caractéristique avantageuse du procédé, l'étape d'étirage de la préforme étire la préforme jusqu'à ce que son fond atteigne des moyens anti-glissement d'un point d'injection de la préforme, qui sont ménagés dans le fond du moule.

Il est alors compensé le fait qu'une remontée précoce de la tige d'élongation puisse entraîner un décentrage de la préforme lors du soufflage.

Préférentiellement, entre la phase de descente et la phase de remontée, la tige d'élongation est maintenue à une position basse le long de l'axe d'extension pendant une durée D comprise entre 5 millisecondes et 120 millisecondes, et préférentiellement entre 20 millisecondes et 60 millisecondes.

Le respect de ces valeurs basse et haute de la durée D permet de s'assurer que le point d'injection de la préforme a été suffisamment centré à l'intérieur du moule, et d'optimiser le fonctionnement des actionneurs de l'unité de formage.

Le respect de la durée D entre 20 millisecondes et 60 millisecondes permet d'éviter que la température de la préforme se refroidisse en dessous de la température de transition vitreuse, pour la réalisation de l'étape de boxage (évitant ainsi un sur-étirage du matériau de la préforme lors de l'étape de boxage), tout en assurant une cadence de production élevée.

Préférentiellement, le procédé de l'invention est mis en œuvre sur une machine rotative, qui comprend un carrousel et au moins deux moules, et l'étape de boxage est initiée à partir d'une valeur angulaire DepBoxMin, en degrés, qui correspond à l'angle parcouru par un moule à partir d'un instant, appelé top départ du cycle, laquelle valeur angulaire est déterminée à l'aide de la formule suivante :

[Math 1]

$$\text{DepBoxMin} = \text{PT10} + 1 + \left( \left( \frac{\text{HT}}{\text{V}} \right) \Big/ \left( \frac{10000}{\text{CAD}} \right) \right)$$

dans laquelle :

- PT10 est une valeur angulaire en degrés d'arrivée de la tige 3 d'élongation dans une position basse ;
- HT est une hauteur d'élévation en millimètres de la tige d'élongation à partir de sa position basse permettant de libérer un volume de boxage de la poignée ;
- V est la vitesse de remontée de la tige d'élongation en millimètres/millisecondes ;
- CAD est la cadence du moule en bouteilles/heure/moule.

L'unité de formage comprend notamment un carrousel qui porte les moules. Les valeurs angulaires sont ainsi relatives à la rotation du carrousel de l'unité de formage et plus précisément à la position angulaire du moule par rapport à un bâti de l'unité de formage sur lequel le carrousel est mobile en rotation.

Selon cette configuration, l'initiation de l'étape de boxage est optimisée en fonction de la hauteur prédéterminée de remontée de la tige d'élongation le long de l'axe d'extension, de la vitesse de remontée, ainsi que de la cadence du moule.

L'invention a également pour objet une unité de formage pour la fabrication d'un récipient par étirage soufflage à partir d'une préforme en matière plastique, l'unité de formage comprenant :

- un moule définissant une empreinte du récipient à former, le moule comprenant au moins un insert de boxage d'une poignée, chaque insert étant mobile au travers d'une paroi du moule le long d'au moins un axe central de boxage jusqu'à une profondeur maximale de boxage à laquelle l'insert définit un volume de boxage de l'insert à l'intérieur du moule ;
- une tige d'élongation mobile en hauteur à l'intérieur du moule le long d'un axe d'extension et destinée à étirer la préforme en fonction d'une trajectoire de descente et de remontée de la tige d'élongation à l'intérieur du moule,

caractérisée en ce qu'au moins un des volumes de boxage de l'insert s'étend autour ou en regard de l'axe d'extension de la tige d'élongation.

L'unité de formage met bien entendu en œuvre le procédé selon l'invention.

Une telle unité de formage selon l'invention permet ainsi de fabriquer un récipient par étirage-soufflage qui dispose d'une poignée boxée autour ou en regard de l'axe d'extension de la tige d'élongation, à l'intérieur du moule, sans que la présence transitoire de la tige d'élongation à l'intérieur du moule ne pose problème ou interfère avec la trajectoire des inserts de boxage. En effet, l'unité de formage, alors configurée à l'aide du procédé selon l'invention, permet la création d'une telle poignée boxée grâce à une remontée anticipée de la tige d'élongation par rapport aux techniques selon l'art antérieur.

Selon une caractéristique préférentielle, la tige d'élongation et sa trajectoire définissent un volume d'occupation temporaire de la tige d'élongation à l'intérieur du moule, au moins un des volumes de boxage de l'insert interférant avec le volume d'occupation temporaire de la tige d'élongation à l'intérieur du moule.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :

[Fig. 1] est une représentation schématique selon une vue en coupe transversale d'un récipient obtenu par le procédé de fabrication selon l'invention et grâce à l'unité de formage selon l'invention, ainsi qu'une représentation de deux inserts de boxage d'une poignée positionnée de part et d'autre du récipient ;

[Fig. 2] est une vue de face du récipient obtenu par le procédé de fabrication et par l'unité de formage selon l'invention ;

[Fig. 3] est une représentation schématique selon une vue en coupe transversale d'un moule d'une unité de formage selon l'invention ;

[Fig. 4] est une représentation du déroulement du procédé de fabrication selon l'invention, illustrant l'enchainement des étapes du procédé en relation une courbe de pression à l'intérieur du récipient à former, avec une courbe illustrant la course de la tige d'élongation à l'intérieur du moule de l'unité de formage, ainsi qu'avec un axe de temps.

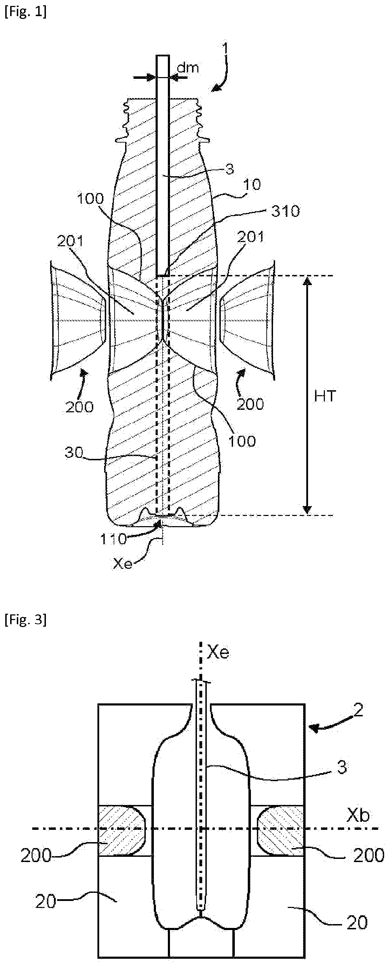

En référence à la figure 3 l'unité de formage permet la fabrication d'un récipient 1 par étirage-soufflage à partir d'une préforme (ou d'une ébauche) en matière plastique.

Selon les figures 1 et 3, l'unité de formage comprend :

- un moule 2 définissant une empreinte du récipient 1 à former ;
- une tige 3 d'élongation mobile en hauteur à l'intérieur du moule 2.

Tel qu'illustré par les figures 1 et 3, l'unité de formage, ainsi que le procédé de fabrication selon l'invention, permettent de fabriquer un récipient 1. Ce récipient 1 prend notamment la forme d'une bouteille.

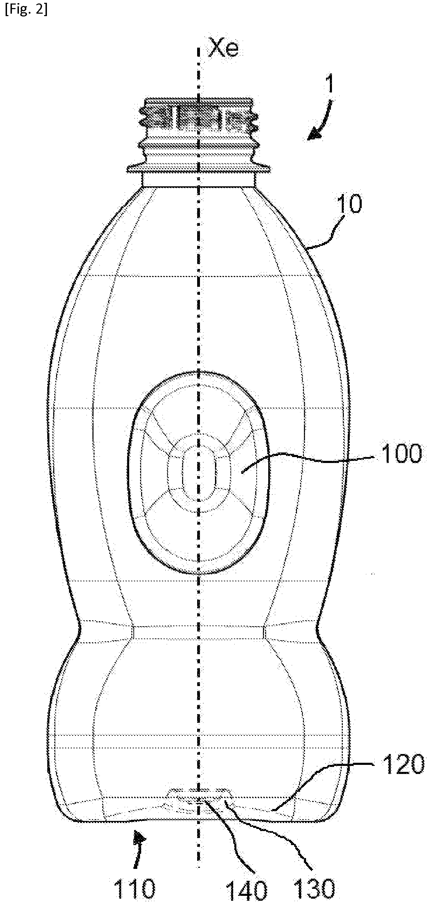

Le récipient 1, illustré sur les figures 1 et 2, présente une paroi 10, une poignée formée par boxage grâce à la déformation d'au moins une portion dite « portion déformée 100 », de la paroi 10 du récipient 1, et un fond 110, comprenant une voute 120 entourant une pastille 130 constituée de matière amorphe et au centre de laquelle se retrouve, comme expliqué au préambule de la présente demande, le point d'injection 140 de la préforme utilisée pour former le récipient 1.

Par « poignée » boxée, il est entendu que le récipient 1 présente dans son volume au moins une forme creuse ou dépression facilitant sa préhension.

Ainsi, en référence aux figures 1 et 2, les deux portions déformées 100 forment chacune une dépression par rapport à la forme générale du récipient 1. Ces dépressions se font face et permettent à une personne de positionner ses doigts en crochet pour améliorer la préhension du récipient 1.

Tel qu'expliqué précédemment et en référence aux figures 1 et 3, le moule 2 définit une empreinte du récipient 1 à former.

Le moule 2 comprend :

- une paroi 20 ;
- deux inserts 200 de boxage d'une poignée.

Chacun des inserts 200 de boxage est mobile au travers de la paroi 20 du moule 2. Plus précisément, les inserts 200 sont mobiles le long d'un axe Xb central de boxage jusqu'à une profondeur maximale de boxage.

A cette profondeur maximale de boxage, les inserts 200 définissent chacun un volume 201 de boxage de l'insert 200 à l'intérieur du moule 2. Chacun de ces inserts 200 permet ainsi de repousser la paroi 10 du récipient 1 pour former une portion déformée 100 et permettre l'apparition de la poignée.

En référence aux figures 1 et 3, la tige 3 d'élongation est mobile en hauteur à l'intérieur du moule 2 le long d'un axe Xe longitudinal se déplacement, encore appelé axe Xe d'extension.

Cette tige 3 d'élongation est destinée à étirer la préforme à partir de laquelle est formée le récipient 1.

Cette tige 3 d'élongation étire la préforme en fonction d'une trajectoire de descente et de remontée de la tige 3 d'élongation à l'intérieur du moule 2 et le long de l'axe Xe d'extension.

Selon une mise en œuvre non représentée, le moule 2 peut présenter des moyens anti-glissement du point d'injection 140 de la préforme. Ces moyens anti-glissement sont supportés par le fond du moule 2. Ces moyens anti-glissement peuvent par exemple prendre la forme d'une cavité de réception de la matière plastique étirée par la tige 3 d'élongation. Ils peuvent coopérer avec des moyens, complémentaires, de la tige 3 d'élongation.

Lors de la descente, puis de la remontée de la tige 3 d'élongation à l'intérieur du moule 2, et plus précisément quand la tige 3 d'élongation est dans une position basse (position atteinte entre une phase de descente E1 et une phase de remontée E2 à l'intérieur du moule 2), la tige 3 d'élongation définit un volume 30 d'occupation temporaire à l'intérieur du moule 2.

Selon l'invention, au moins un des volumes 201 de boxage de l'insert 200 de boxage s'étend autour ou en regard de l'axe Xe d'extension de la tige 3 d'élongation.

En effet, la poignée du récipient 1 est formée sur l'axe Xe d'extension de la tige 3 d'élongation, c'est-à-dire de manière centrée sur le récipient 1. Par l'expression « poignée centrée sur le récipient », il est possible que l'axe central de la poignée soit distant de l'axe Xe d'extension de la tige 3 d'élongation, étant entendu que le volume 201 de boxage interfère avec le volume 30 d'occupation temporaire de la tige 3 d'élongation.

En d'autres termes, la ou l'une des portions déformées 100 de la paroi 10 du récipient 1 affleure, entre, ou dépasse, le volume 30 d'occupation temporaire de la tige 3 d'élongation à l'intérieur du moule 2. Cette position de la portion déformée 100 résulte, tel qu'évoqué précédemment, du volume 201 de boxage défini par la forme de l'insert 200 et de sa profondeur maximale de boxage.

Au moins l'un des deux volumes 201 de boxage des inserts 200 de boxage interfère avec le volume 30 d'occupation temporaire de la tige 3 d'élongation à l'intérieur du moule 2. En d'autres termes, au moins un des deux volumes 201 de boxage empiète sur le volume 30 d'occupation temporaire de la tige d'élongation. Tel que cela est illustré par la figure 1, ce sont les deux volumes 201 de boxage des inserts 200 de boxage qui interfèrent avec le volume 30 d'occupation temporaire de la tige 3 d'élongation à l'intérieur du moule 2.

Cette conception est permise grâce au procédé selon l'invention, qui est un procédé de fabrication par étirage-soufflage à partir d'une préforme en matière plastique, par exemple en PET, au sein de l'unité de formage.

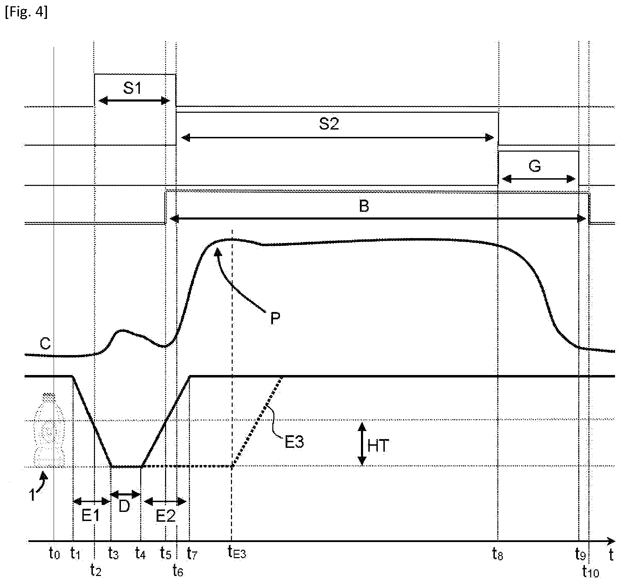

En référence à la figure 4, le procédé de fabrication du récipient 1 comprend :

- une étape de pré-soufflage S1 ;
- une étape de soufflage S2, faisant suite à l'étape de pré-soufflage S1 ;
- une étape de dégazage G faisant suite à l'étape de soufflage S2.

En plus des étapes de pré-soufflage, de soufflage et de dégazage du procédé, le procédé comprend également une étape d'étirage de la préforme ainsi qu'une étape de boxage B de la poignée à l'aide des inserts 200 de boxage.

L'étape d'étirage de la préforme comprend successivement une phase de descente E1 de la tige 3 d'élongation, puis une phase de remontée E2 de la tige 3 d'élongation le long de l'axe Xe d'extension.

Lors de l'étape d'étirage de la préforme, celle-ci peut avantageusement être étirée de façon que son fond atteigne les moyens anti-glissement du point d'injection 140 de la préforme.

Selon l'invention, et tel que cela est détaillé ci-après, la phase de remontée E2 de la tige 3 d'élongation est initiée avant l'étape de soufflage S2.

En effet, alors que, selon l'art antérieur, la phase de remontée E3 de la tige 3 d'élongation est initiée au cours de l'étape de soufflage S2, voire au moment du dégazage, la phase de remontée E2 selon l'invention intervient plus tôt au cours du cycle de fabrication du récipient 1, notamment pendant l'étape de pré-soufflage S1.

Plus précisément, en référence à la figure 4, la phase de remontée E3 selon l'art antérieur est initiée à un instant $t_{E3}$ postérieur à la survenance d'un pic de pression P à l'intérieur du récipient 1, intervenant durant l'étape de soufflage S2, illustré sur la courbe C de la pression à l'intérieur du récipient 1 à former.

De plus, toujours selon l'invention, l'étape de boxage B est initiée pendant la phase de remontée E2 de la tige 3 d'élongation, après que l'extrémité 310 distale de la tige 3 d'élongation soit remontée au-dessus d'une hauteur prédéterminée le long de l'axe Xe d'extension, sur laquelle la poignée est formée.

La poignée peut ainsi être formée sur l'axe Xe d'extension de la tige 3 d'élongation, sans que ne se produise un phénomène de sur-étirage de la matière plastique déformée par les inserts 200 de boxage, et sans que la tige 3 d'élongation n'empêche le boxage, la tige 3 d'élongation étant préventivement remontée.

Tel qu'illustré par la figure 1, la hauteur prédéterminée, le long de l'axe Xe d'extension, au-dessus de laquelle la tige 3 d'élongation doit remonter pour initier l'étape de boxage B, est préférentiellement située au-dessus d'un axe Xb central de boxage le long duquel les inserts 200 de boxage sont mobiles.

L'axe Xb central de boxage est séquent et perpendiculaire à l'axe Xe d'extension de la tige 3 d'élongation.

La figure 4 est décrite ci-après selon un déroulé temporel.

Une séquence de fabrication débute à un instant to, encore appelé top départ du cycle.

Ensuite, après quelque ms, c'est le début effectif du de cycle de fabrication, avec la phase de descente E1 de la tige d'élongation qui est initiée à un instant $t_1$. La tige 3 d'élongation descend alors à l'intérieur du moule pour atteindre sa position basse.

Pendant la descente de la tige 3 d'élongation, à un instant $t_2$, l'étape de pré-soufflage S1 est initiée. La courbe C de pression illustre l'évolution de la pression dans le récipient 1 pendant cette étape de pré-soufflage S1.

Après l'initiation de l'étape de pré-soufflage S1, la tige 3 d'élongation atteint sa position basse à un instant $t_3$ correspondant à la fin de la phase de descente E1. La tige 3 d'élongation reste dans sa position basse pendant une durée D comprise entre 5 millisecondes et 120 millisecondes, et préférentiellement entre 20 millisecondes et 60 millisecondes.

Après le maintien de la tige 3 d'élongation à sa position basse pendant la durée D, la phase de remontée E2 de la tige 3 d'élongation est initiée à un instant $t_4$.

L'étape de boxage B est initiée alors que l'étape de pré-soufflage S1 n'est pas totalement achevée, à un instant ts. A cet instant ts, la tige d'élongation est remontée à une hauteur d'élévation HT à partir de sa position basse permettant de libérer un volume 201 de boxage de la poignée, la hauteur d'élévation HT étant au-dessus de la hauteur prédéterminée le long de l'axe Xe d'extension.

Sur des machines rotatives de fabrication de récipients, comme celles de la demanderesse, qui comprennent un carrousel qui porte plusieurs moules 2, cet instant $t_5$ peut avantageusement correspondre à une valeur angulaire en degrés nommée « DepBoxMin », qui correspond à l'angle parcouru par un moule à partir de l'instant $t_0$.

Cette valeur angulaire peut être déterminée à l'aide de la formule suivante :

[Math 1]

$$DepBoxMin = PT10 + 1 + \left(\left(\frac{HT}{V}\right)\Big/\left(\frac{10000}{CAD}\right)\right)$$

dans laquelle:

- la valeur PT10 correspond à une valeur angulaire en degrés d'arrivée de la tige 3 d'élongation dans une position basse, soit en termes de temps à l'instant $t_3$ (il s'agit de l'angle parcouru depuis l' instant $t_1$) ;
- la valeur V correspond alors à la vitesse de remontée de la tige 3 d'élongation en millimètres/millisecondes, et ;
- CAD est la cadence du moule 2 en bouteilles/heure/moule.

Selon un exemple d'application dans lequel :

- PT10 serait égal à 62° ;
- HT serait égal à 100 mm ;
- V serait égal à 1,29 mm.ms$^{-1}$
- CAD serait égal à 1200 bouteilles/heure/moule,

DepBoxMin serait égal à environ 72°.

Dans cet exemple d'application, l'instant $t_4$, qui correspondant à l'initiation de la phase de remontée E2 de la tige 3 d'élongation peut correspondre à une valeur angulaire de 65°. La durée entre l'instant $t_4$ et l'instant ts, nécessaire pour que la tige d'élongation atteigne la hauteur d'élévation HT, correspond alors à 74 ms ou encore à 7° (soit 72°-7°).

Ainsi, dans les machines à carrousel, les valeurs angulaires sont relatives à la rotation du carrousel de l'unité de formage et plus précisément à la position angulaire du moule par rapport à une position de référence sur un bâti de l'unité de formage sur lequel le carrousel est mobile en rotation.

Lors de l'étape de boxage B, les portions déformées 100 du récipient 1 entrent dans le volume 30 d'occupation temporaire (illustré sur la figure 1) de la tige 3 d'élongation quand celle-ci est dans une position basse entre sa phase de descente E1 et sa phase de remontée E2.

En référence à la figure 1, la poignée est ainsi formée en rapprochant deux portions déformées 100 de la paroi 10 du récipient 1 et ce au moins jusqu'à un espacement maximal qui est inférieur à un diamètre minimum (dm) de la tige 3 d'élongation. Ce diamètre minimum est par exemple de 7 mm.

Plus précisément, de préférence, la poignée est formée en rapprochant les deux portions déformées 100 de la paroi 10 du récipient 1 jusqu'à une distance minimale, dite « entrefer ». Cet entrefer est inférieur au diamètre minimum dm de la tige 3 d'élongation.

De cette façon, un volume est conservé entre les deux portions déformées 100 de la paroi 10 du récipient 1, et un liquide contenu dans le récipient peut prendre place entre ces deux portions déformées 100.

Après l'instant ts, survient l'instant $t_6$, qui correspond à la fin de l'étape de pré-soufflage S1 et à l'initiation de l'étape de soufflage S2. L'étape de pré-soufflage peut présenter une durée de 200 ms.

Suite à l'initiation de l'étape de soufflage S2, l'étape de remontée E2 de la tige d'élongation se termine à l'instant $t_7$.

Il est à noter que la remontée de la tige 3 d'élongation s'achève avant que le pic de pression P ne soit atteint à l'intérieur du récipient 1.

A l'instant ts, l'étape de soufflage S2 se termine, et l'étape de dégazage G s'enchaîne pour se terminer à un instant $t_9$.

L'étape de soufflage S2 dure 1700 ms, et l'étape de dégazage peut durer 200 ms.

Après la fin de l'étape de de dégazage G, à l'instant $t_{10}$, l'étape de boxage B se termine. Cette étape de boxage B présente ainsi une durée pouvant atteindre 1960 ms.

Selon le présent mode de réalisation illustré par la figure 4, la phase de remontée E2 de la tige 3 d'élongation et l'étape de boxage B sont toutes les deux initiées pendant l'étape de pré-soufflage S1.

Selon un autre mode de réalisation non illustré, la phase de remontée E2 de la tige 3 d'élongation peut être initiée pendant l'étape de pré-soufflage S1 tandis que l'étape de boxage B est initiée pendant l'étape de soufflage S2.

Toujours selon un autre mode de réalisation, l'étape de boxage B peut être initiée à l'aide d'un asservissement à la phase de remontée E2 de la tige 3 d'élongation, par exemple à l'aide d'une came.

**Revendications**

1. Procédé de fabrication d'un récipient (1) par étirage soufflage à partir d'une préforme en matière plastique au sein d'une unité de formage, l'unité de formage comprenant :

   - au moins un moule (2) définissant une empreinte du récipient à former et comprenant au moins un insert (200) de boxage d'une poignée, le ou chaque insert étant mobile au travers d'une paroi (20) du moule ;

   une tige (3) d'élongation mobile en hauteur à l'intérieur du moule le long d'un axe (Xe) d'extension et destinée à étirer la préforme,

   - le procédé comprenant successivement une étape de pré-soufflage (S1) et une étape de soufflage (S2),
   - le procédé comprenant également :
   - une étape d'étirage de la préforme comprenant successivement une phase de descente (E1), et une phase de remontée (E2) de la tige d'élongation le long de l'axe d'extension ;
   - une étape de boxage (B) d'une poignée à l'aide du ou des inserts, la poignée étant formée en déformant au moins une portion, dite « portion déformée » (100), d'une paroi (10) du récipient,

   **caractérisé en ce que** :

   - la phase de remontée de la tige d'élongation est initiée avant l'étape de soufflage ;
   - l'étape de boxage est initiée après la remontée de la tige d'élongation au-dessus d'une hauteur prédéterminée le long de l'axe d'extension sur laquelle la poignée est formée, la poignée étant formée sur l'axe d'extension de la tige d'élongation.

2. Procédé selon la revendication précédente, **caractérisé en ce que**, lors de l'étape de boxage (B), la ou les portions déformées (100) entrent dans un volume précédemment occupé par la tige (3) d'élongation dans une position basse entre sa phase de descente (E1) et sa phase de remontée (E2).

3. Procédé selon l'une quelconque des revendications précédentes, **caractérisé en ce que** la poignée est formée en rapprochant deux portions déformées (100) de la paroi (10) du récipient (1) au moins jusqu'à un espacement maximal, l'espacement maximal étant inférieur à un diamètre minimum (dm) de la tige (3) d'élongation.

4. Procédé selon la revendication précédente, **caractérisé en ce que** la poignée est formée en rapprochant les deux portions déformées (100) de la paroi (10) du récipient (1) jusqu'à une distance minimale dite « entrefer », l'entrefer étant inférieur au diamètre minimum (dm) de la tige (3) d'élongation.

5. Procédé selon l'une quelconque des revendications précédentes, **caractérisé en ce que** la phase de remontée (E2) de la tige (3) d'élongation et l'étape de boxage (B) sont initiées pendant l'étape de pré-soufflage (S1).

6. Procédé selon l'une quelconque des revendications 1 à 4, **caractérisé en ce que** la phase de remontée (E2) de la tige (3) d'élongation est initiée pendant l'étape de pré-soufflage (S1), et l'étape de boxage (B) est initiée pendant l'étape de soufflage (S2).

7. Procédé selon l'une quelconque des revendications précédentes, **caractérisé en ce que** l'étape de boxage (B) est initiée à l'aide d'un asservissement à la phase de remontée (E2) de la tige (3) d'élongation.

8. Procédé selon l'une quelconque des revendications précédentes, **caractérisé en ce que** la hauteur prédéterminée est située au-dessus d'un axe (Xb) central de boxage, le long duquel le ou les inserts (200) sont mobiles, l'axe central de boxage étant sécant et perpendiculaire à l'axe (Xe) d'extension de la tige (3) d'élongation.

9. Procédé selon l'une quelconque des revendications précédentes, **caractérisé en ce que** l'étape d'étirage de la préforme étire la préforme jusqu'à ce que son fond atteigne des moyens anti-glissement d'un point d'injection (140) de la préforme, ménagés dans le fond du moule (2).

10. Procédé selon l'une quelconque des revendications précédentes, **caractérisé en ce qu'**entre la phase de descente (E1) et la phase de remontée (E2), la tige (3) d'élongation est maintenue à une position basse le long de l'axe (Xe) d'extension pendant une durée D comprise entre 5 millisecondes et 120 millisecondes, et préférentiellement entre

9

20 millisecondes et 60 millisecondes.

11. Procédé selon l'une quelconque des revendications précédentes, **caractérisé en ce qu'**il est mis en œuvre sur une machine rotative, qui comprend un carrousel et au moins deux moules, et l'étape de boxage (B) est initiée à partir d'une valeur angulaire DepBoxMin, en degrés, qui correspond à l'angle parcouru par un moule à partir d'un instant to, appelé top départ du cycle, laquelle valeur angulaire est déterminée à l'aide de la formule suivante :

$$\mathrm{DepBoxMin} = \mathrm{PT10} + 1 + \left(\left(\frac{\mathrm{HT}}{\mathrm{V}}\right)\bigg/\left(\frac{10000}{\mathrm{CAD}}\right)\right)$$

dans laquelle :

- PT10 est une valeur angulaire en degrés d'arrivée de la tige (3) d'élongation (3) dans une position basse ;
- HT est une hauteur d'élévation en millimètres de la tige d'élongation à partir de sa position basse permettant de libérer un volume de boxage de la poignée ;
- V est la vitesse de remontée de la tige d'élongation en millimètres/millisecondes ;
- CAD est la cadence du moule (2) en bouteilles/heure/moule.

12. Unité de formage pour la fabrication d'un récipient (1) par étirage soufflage à partir d'une préforme en matière plastique, l'unité de formage comprenant :

- un moule (2) définissant une empreinte du récipient à former, le moule comprenant au moins un insert (200) de boxage d'une poignée, chaque insert étant mobile au travers d'une paroi (20) du moule le long d'au moins un axe (Xb)central de boxage jusqu'à une profondeur maximale de boxage à laquelle l'insert définit un volume de boxage de l'insert à l'intérieur du moule ;
- une tige (3) d'élongation mobile en hauteur à l'intérieur du moule le long d'un axe (Xe) d'extension et destinée à étirer la préforme en fonction d'une trajectoire de descente et de remontée de la tige (3) d'élongation à l'intérieur du moule,

**caractérisée en ce qu'**au moins un des volumes de boxage de l'insert s'étend autour ou en regard de l'axe d'extension de la tige d'élongation.

13. Unité de formage selon la revendication précédente, **caractérisée en ce que** la tige (3) d'élongation et sa trajectoire définissent un volume (30) d'occupation temporaire de la tige d'élongation à l'intérieur du moule (2), au moins un des volumes de boxage de l'insert (200) interférant avec le volume (30) d'occupation temporaire de la tige d'élongation à l'intérieur du moule.

**Patentansprüche**

1. Verfahren zur Herstellung eines Behälters (1) durch Streckblasen aus einem Vorformling aus Kunststoff innerhalb einer Formungseinheit, die Formungseinheit umfassend:

- wenigstens eine Form (2), die einen Abdruck des zu bildenden Behälters definiert und wenigstens einen Einsatz (200) zum Treiben eines Griffs umfasst, wobei der oder jeder Einsatz durch eine Wand (20) der Form bewegbar ist;

eine Streckstange (3), die innerhalb der Form entlang einer Erstreckungsachse (Xe) in der Höhe beweglich ist und dazu bestimmt ist, den Vorformling zu strecken,

- wobei das Verfahren aufeinanderfolgend einen Schritt des Vorblasens (S1) und einen Schritt des Blasens (S2) umfasst,
- das Verfahren ebenfalls umfassend:
- einen Schritt des Streckens des Vorformlings, der aufeinanderfolgend eine Phase des Absenkens (E1) und eine Phase des Wiederanhebens (E2) der Streckstange entlang der Erstreckungsachse umfasst;
- einen Schritt des Treibens (B) eines Griffs mithilfe des oder der Einsätze, wobei der Griff durch Verformung wenigstens eines Teilbereichs, "verformter Teilbereich" (100) genannt, einer Wand (10) des Behälters gebildet wird,

**dadurch gekennzeichnet, dass**:

- die Phase des Wiederanhebens der Streckstange vor dem Schritt des Blasens eingeleitet wird;
- der Schritt des Treibens nach dem Wiederanheben der Streckstange über eine vorbestimmte Höhe entlang der Erstreckungsachse eingeleitet wird, auf welcher der Griff gebildet wird, wobei der Griff auf der Erstreckungsachse der Streckstange gebildet wird.

2. Verfahren nach dem vorhergehenden Anspruch, **dadurch gekennzeichnet, dass** beim Schritt des Treibens (B) der oder die verformten Teilbereiche (100) in ein Volumen eintreten, das zuvor von der Streckstange (3) in einer tiefen Position zwischen ihrer Phase des Absenkens (E1) und des Wiederanhebens (E2) eingenommen war.

3. Verfahren nach einem der vorhergehenden Ansprüche, **dadurch gekennzeichnet, dass** der Griff durch Annäherung zweier verformter Teilbereiche (100) der Wand (10) des Behälters (1) wenigstens bis zu einem maximalen Abstand gebildet wird, wobei der maximale Abstand kleiner als ein Minimaldurchmesser (dm) der Streckstange (3) ist.

4. Verfahren nach dem vorhergehenden Anspruch, **dadurch gekennzeichnet, dass** der Griff durch Annäherung der zwei verformten Teilbereiche (100) der Wand (10) des Behälters (1) bis zu einem Minimalabstand, dem "Luftspalt", gebildet wird, wobei der Luftspalt kleiner als der Minimaldurchmesser (dm) der Streckstange (3) ist.

5. Verfahren nach einem der vorhergehenden Ansprüche, **dadurch gekennzeichnet, dass** die Phase des Wiederanhebens (E2) der Streckstange (3) und der Schritt des Treibens (B) während des Schritts des Vorblasens (S1) eingeleitet werden.

6. Verfahren nach einem der Ansprüche 1 bis 4, **dadurch gekennzeichnet, dass** die Phase des Wiederanhebens (E2) der Streckstange (3) während des Schritts des Vorblasens (S1) und der Schritt des Treibens (B) während des Schritts des Blasens (S2) eingeleitet wird.

7. Verfahren nach einem der vorhergehenden Ansprüche, **dadurch gekennzeichnet, dass** der Schritt des Treibens (B) mithilfe einer Regelung bei der Phase des Wiederanhebens (E2) der Streckstange (3) eingeleitet wird.

8. Verfahren nach einem der vorhergehenden Ansprüche, **dadurch gekennzeichnet, dass** sich die vorbestimmte Höhe über einer Treib-Mittelachse (Xb) befindet, entlang welcher der oder die Einsätze (200) bewegbar sind, wobei die Treib-Mittelachse die Erstreckungsachse (Xe) der Streckstange (3) schneidet und senkrecht zu dieser verläuft.

9. Verfahren nach einem der vorhergehenden Ansprüche, **dadurch gekennzeichnet, dass** der Schritt des Streckens des Vorformlings den Vorformling streckt, bis dessen Boden Rutschsicherungsmittel eines Einspritzpunkts (140) des Vorformlings erreicht, die im Boden der Form (2) vorgesehen sind.

10. Verfahren nach einem der vorhergehenden Ansprüche, **dadurch gekennzeichnet, dass** zwischen der Phase des Absenkens (E1) und der Phase des Wiederanhebens (E2) die Streckstange (3) während einer Dauer D zwischen 5 Millisekunden und 120 Millisekunden und vorzugsweise zwischen 20 Millisekunden und 60 Millisekunden in einer tiefen Position entlang der Erstreckungsachse (Xe) gehalten wird.

11. Verfahren nach einem der vorhergehenden Ansprüche, **dadurch gekennzeichnet, dass** es auf einer Drehmaschine durchgeführt wird, die ein Karussell und wenigstens zwei Formen umfasst, und der Schritt des Treibens (B) anhand eines Winkelwerts DepBoxMin in Grad eingeleitet wird, der dem Winkel entspricht, der von einer Form ab einem Zeitpunkt to, Startzeitzeichen des Zyklus genannt, zurückgelegt wird, wobei der Winkelwert mithilfe der folgenden Formel bestimmt wird:

$$DepBoxMin = PT10 + 1 + \left( \left( \frac{HT}{V} \right) \middle/ \left( \frac{10000}{CAD} \right) \right)$$

wobei:

- PT10 ein Winkelwert in Grad des Eintreffens der Streckstange (3) in einer tiefen Position ist;

- HT eine Anhebehöhe in Millimetern der Streckstange ausgehend von ihrer tiefen Position ist, die es ermöglicht, ein Treibvolumen des Griffs freizugeben;
- V die Wiederanhebegeschwindigkeit der Streckstange in Millimetern/Millisekunden ist;
- CAD die Rate der Form (2) in Flaschen/Stunde/Form ist.

12. Formungseinheit zur Herstellung eines Behälters (1) durch Streckblasen aus einem Vorformling aus Kunststoff, die Formungseinheit umfassend:

- eine Form (2), die einen Abdruck des zu bildenden Behälters definiert, wobei die Form wenigstens einen Einsatz (200) zum Treiben eines Griffs umfasst, wobei jeder Einsatz durch eine Wand (20) der Form entlang wenigstens einer Treib-Mittelachse (Xb) bis zu einer maximalen Treibtiefe bewegbar ist, bei welcher der Einsatz ein Treibvolumen des Einsatzes innerhalb der Form definiert;
- eine Streckstange (3), die innerhalb der Form entlang einer Erstreckungsachse (Xe) in der Höhe beweglich ist und dazu bestimmt ist, den Vorformling in Abhängigkeit von einer Absenk- und Wiederanhebebahn der Streckstange (3) innerhalb der Form zu strecken, **dadurch gekennzeichnet, dass** sich wenigstens eins der Treibvolumen des Einsatzes um die oder gegenüber der Erstreckungsachse der Streckstange erstreckt.

13. Formungseinheit nach dem vorhergehenden Anspruch, **dadurch gekennzeichnet, dass** die Streckstange (3) und ihre Bahn ein temporäres Einnahmevolumen (30) der Streckstange innerhalb der Form (2) definieren, wobei wenigstens eins der Treibvolumen des Einsatzes (200) mit dem temporären Einnahmevolumen (30) der Streckstange innerhalb der Form interferieren.

**Claims**

1. Method for manufacturing a container (1) by stretch blow-molding from a preform made of plastic material in a forming unit, the forming unit comprising:

- at least one mold (2) defining an impression of the container to be formed and comprising at least one boxing insert (200) for a handle, the or each insert being movable through a wall (20) of the mold; an elongation rod (3) that is movable heightwise within the mold along an extension axis (Xe) and intended to stretch the preform,
- the method comprising, in succession, a pre-blow-molding step (S1) and a blow-molding step (S2),
- the method also comprising:

  - a step of stretching of the preform comprising, in succession, a phase of lowering (E1), and a phase of rising (E2) of the elongation rod along the extension axis;
  - a step of boxing (B) of a handle using the insert or inserts, the handle being formed by deforming at least one portion, called "deformed portion" (100), of a wall (10) of the container, **characterized in that**:
  - the phase of rising of the elongation rod is initiated before the blow-molding step;
  - the boxing step is initiated after the rising of the elongation rod beyond a predetermined height along the extension axis on which the handle is formed, the handle being formed on the extension axis of the elongation rod.

2. Method according to the preceding claim, **characterized in that**, during the boxing step (B), the deformed portion or portions (100) enter into a volume previously occupied by the elongation rod (3) in a low position between its lowering phase (E1) and its rising phase (E2).

3. Method according to any one of the preceding claims, **characterized in that** the handle is formed by bringing two deformed portions (100) of the wall (10) of the container (1) closer together at least to a maximum spacing, the maximum spacing being less than a minimum diameter (dm) of the elongation rod (3).

4. Method according to the preceding claim, **characterized in that** the handle is formed by bringing the two deformed portions (100) of the wall (10) of the container (1) closer together to a minimum distance called "air gap", the air gap being less than the minimum diameter (dm) of the elongation rod (3).

5. Method according to any one of the preceding claims, **characterized in that** the rising phase (E2) of the elongation rod (3) and the boxing step (B) are initiated during the pre-blow-molding step (S1).

6.  Method according to any one of Claims 1 to 4, **characterized in that** the rising phase (E2) of the elongation rod (3) is initiated during the pre-blow-molding step (S1), and the boxing step (B) is initiated during the blow-molding step (S2).

7.  Method according to any one of the preceding claims, **characterized in that** the boxing step (B) is initiated using servocontrol in the rising phase (E2) of the elongation rod (3).

8.  Method according to any one of the preceding claims, **characterized in that** the predetermined height is situated above a central boxing axis (Xb), along which the insert or inserts (200) are movable, the central boxing axis being secant and at right angles to the extension axis (Xe) of the elongation rod (3).

9.  Method according to any one of the preceding claims, **characterized in that** the step of stretching of the preform stretches the preform until its bottom reaches anti-slip means of an injection point (140) of the preform, formed in the bottom of the mold (2).

10. Method according to any one of the preceding claims, **characterized in that**, between the lowering phase (E1) and the rising phase (E2), the elongation rod (3) is maintained in a low position along the extension axis (Xe) for a duration D of between 5 milliseconds and 120 milliseconds, and preferentially between 20 milliseconds and 60 milliseconds.

11. Method according to any one of the preceding claims, **characterized in that** it is implemented on a rotary machine, which comprises a carrousel and at least two molds, and the boxing step (B) is initiated from an angular value DepBoxMin, in degrees, which corresponds to the angle traveled by a mold from an instant to, called cycle start mark, which angular value is determined using the following formula:

$$\text{DepBoxMin} = \text{PT10} + 1 + \left(\left(\frac{\text{HT}}{\text{V}}\right)\middle/\left(\frac{10000}{\text{CAD}}\right)\right)$$

in which:

- PT10 is an angular value in degrees of arrival of the elongation rod (3) in a low position;
- HT is an elevation height in millimeters of the elongation rod from its low position that allows a boxing volume of the handle to be freed;
- V is the speed of rise of the elongation rod in millimeters/milliseconds;
- CAD is the rate of the mold (2) in bottles/hour/mold.

12. Forming unit for manufacturing a container (1) by stretch blow-molding from a preform made of plastic material, the forming unit comprising:

- a mold (2) defining an impression of the container to be formed, the mold comprising at least one boxing insert (200) for a handle, each insert being movable through a wall (20) of the mold along at least one central boxing axis (Xb) to a maximum boxing depth at which the insert defines a boxing volume of the insert inside the mold;
- an elongation rod (3) that is movable heightwise inside the mold along an extension axis (Xe) and intended to stretch the preform according to a trajectory of lowering and rising of the elongation rod (3) inside the mold, **characterized in that** at least one of the boxing volumes of the insert extends around or facing the extension axis of the elongation rod.

13. Forming unit according to the preceding claim, **characterized in that** the elongation rod (3) and its trajectory define a volume (30) of temporary occupancy of the elongation rod inside the mold (2), at least one of the boxing volumes of the insert (200) interfering with the volume (30) of temporary occupancy of the elongation rod inside the mold.

[Fig. 1]

[Fig. 3]

[Fig. 2]

Xe

1

10

100

120

110   140   130

[Fig. 4]

## RÉFÉRENCES CITÉES DANS LA DESCRIPTION

**Documents brevets cités dans la description**

- US 2002171161 A1

- US 2016001490 A1